# EUROPÄISCHE PATENTSCHRIFT

(11) **EP 1 392 543 B1**
(45) Veröffentlichungstag und Bekanntmachung des Hinweises auf die Patenterteilung: **28.02.2007**
(21) Anmeldenummer: 02724217.1
(22) Anmeldetag: 09.03.2002
(51) Int. Cl.: F16H 59/00, F16H 61/12

(54) **ANTRIEBSREGELUNG**
DRIVE CONTROL
REGULATION D'ENTRAINEMENT

(30) Priorität: 06.06.2001 DE 10127308
(43) Veröffentlichungstag der Anmeldung: 03.03.2004
(73) Patentinhaber: Wittenstein AG, 97999 Igersheim (DE)
(72) Erfinder: WITTENSTEIN, Manfred, 97980 Bad Mergentheim (DE); BAYER, Thomas, 97999 Igersheim (DE)
(74) Vertreter: Weiss, Peter
(86) Internationale Anmeldenummer: PCT/EP2002/002609
(87) Internationale Veröffentlichungsnummer: WO 2002/098697

(56) Entgegenhaltungen:
- EP-A- 1 055 547
- WO-A-95/05951
- DE-A- 4 039 005
- US-A- 4 866 622
- US-A- 5 033 328

## Beschreibung

Die vorliegende Erfindung betrifft eine Antriebsregelung zur Steuerung und/oder Regelung eines mit einem elektrisch betriebenen Motor verbundenen Getriebes für Maschinen.

Die Steuerung von Getrieben erfolgt derzeit vielfach mittels einer übergeordneten Steuerung, die auf eine Leistungs- und Steuerelektronik wirkt und durch Einflussnahme auf die Kraftversorgung den Motor steuert. Der Motor wiederum wirkt zumeist über ein Getriebe auf eine Maschine.

Die EP 1 055 547 A1 beschreibt eine Vorrichtung zur elektronischen Steuerung von Schienenfahrzeugantriebskomponenten mit einer Steuereinrichtung zur elektronischen Steuerung der Antriebakomponenten. Dabei sind die einzelnen Komponenten der Steuereinrichtung dezentral zueinander angeordnet und miteinander über ein Kommunikationsnetzwerk gekoppelt.

Die US 5,033,328 offenbart einen Antrieb mit einem anschliessenden Getriebe, wobei über ein Sensorelement der in einem Linearantrieb bzw. Getriebe erzeugte Druck ermittelbar und bestimmbar ist.

In der US 4,866,622 ist ein Antriebssystem für ein motorbetriebenes Fahrrad beschrieben, mit einem elektrischen Antrieb, dessen Bremsvorgang elektronisch mittels einer elektronischen Steuerung beeinflussbar ist.

Die WO 95/05951 offenbart eine Steuerung für ein Fahrzeugautomatikgetriebe, wobei eine Steuerung die Schaltung der einzelnen Gänge des Automatikgetriebes übernimmt.

Der vorliegenden Erfindung liegt die Aufgabe zugrunde, die Steuerung und Regelung von Antrieben bzw. von Motoren und/oder Getrieben zu verbessern.

Gemäß der vorliegenden Erfindung weist ein mit einem Motor verbundenes Getriebe einen oder mehrere Sensoren zur Erfassung betriebsspezifischer Parameter des Antriebes auf. Derartige Sensoren können bspw. Kippmomentsensoren, Leckagesensoren, Drehmomentensensoren, Temperatursensoren oder Drehzahlsensoren sein. Die Sensorik des Getriebes erlaubt es Informationen des Getriebes, wie beispielsweise Kippmoment, Drehmoment, Temperatur, Leckagen, Kräfte, Crash oder Lebensdauer, zu erkennen und aufzunehmen.

Jeder Sensor des Antriebes, insbesondere des Getriebes ist mit einer dezentralen Sensorauswerteeinheit verbunden, die sich vorzugsweise räumlich an dem Motor oder dem Getriebe oder zumindest in engerer räumlicher Nähe hierzu befindet. Die Sensorauswerteeinheit wertet eigenständig die von dem oder den Sensoren gelieferten Informationen aus. Die so ausgewerteten Informationen können dann beispielsweise auch von einer zentralen Steuerung abgefragt werden.

Die Sensorauswerteeinheit zusammen mit dem oder den Sensoren stellt eine dezentrale intelligente Informationssammlungs- und Auswerteeinheit dar, die es beispielsweise ermöglicht einen Informationsfluss vom Getriebe hin zu der zentralen Steuerung aufzubauen, wobei die Steuerung dann wiederum die so erhaltenen Informationen für die Motorsteuerung verwenden kann. Die Erfindung unterscheidet sich somit von herkömmlichen Motorsteuerungen, bei denen ein Informationsfluss einseitig von der zentralen Steuerung in Richtung des Motors stattfindet, jedoch keine Informationen zurückfließen.

In einer bevorzugten Ausführungsform der Erfindung weist die Sensorauswerteeinheit ferner eine Steuerungseinheit auf, die es der Sensorauswerteeinheit erlaubt unmittelbar auf das Getriebe einzuwirken und/oder dieses zu steuern.

Wird beispielsweise ein Dichtring bzw. Simmerring undicht, so kann automatisch dezentral und eigenständig mittels der Steuerungseinheit der Sensorauswerteeinheit ein zweiter Simmerring dazugeschaltet werden.

Auf diese Weise läßt sich durch die Sensorauswerteeinheit eigenständig das Getriebe oder eine Kombination aus Motor und Getriebe durch die Sensorauswerteeinheit regeln und steuern und beispielsweise im Betrieb auf unterschiedliche Kräfte, ungewünschte oder bestimmte Drehmomente auslegen.

Die Sensorauswerteeinheit weist bevorzugt eine Kommunikationseinheit auf, die es der Sensorauswerteeinheit erlaubt eine Datenkommunikation mit externen Geräten, wie z.B. der zentralen Steuerung, durchzuführen, und/oder die es solchen externen Geräten erlaubt Zugriff auf die Sensorauswerteeinheit zu nehmen. Dabei kann jeder adäquate Kommunikationspfad für die Datenkommunikation verwendet werden, wie z.B. eine drahtlose oder drahtgebundene Übertragung beispielsweise mittels eines Mobilfunksystems; einer Festverdrahtung, eines Datennetzes wie eines Local Area Networks (LAN), BlueTooth oder anderer Übertragungsprotokolle.

Weitere Vorteile, Merkmale und Einzelheiten der Erfindung ergeben sich aus der nachfolgenden Beschreibung eines bevorzugten Ausführungsbeispieles sowie anhand dessen Zeichnung; diese zeigt in:

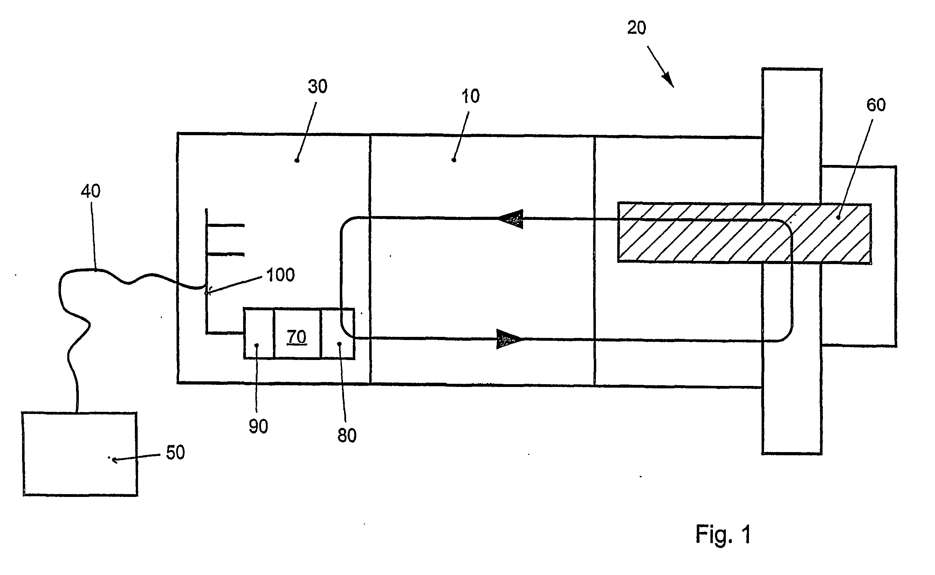

Figur 1 in einem schematischen Blockschaltbild eine Motorsteuerung gemäß der vorliegenden Erfindung.

Ein Motor 10 ist in dem Ausführungsbeispiel nach Figur 1 mit einem Getriebe 20 verbunden. Eine Steuerungs- und Leistungselektronik 30 erlaubt die elektronische Steuerung und Regelung des Motors 10 entweder unmittelbar am Gerät oder über einen Kommunikationspfad 40 von einem externen Gerät 50 wie beispielsweise einer zentralen Steuerung.

Das Getriebe 20 weist ferner einen oder mehrere Sensoren 60 auf, die sich entweder auf oder an dem Getriebe 20 befinden oder damit verbunden sind. Der Einfachheit halber soll im Folgenden davon ausgegangen werden, dass es sich um mehrere Sensoren 60 handelt.

Die Sensoren 60 sind mit einer Auswerteeinheit 70 verbunden, wie dies in Figur 1 über die Pfeile symbolisiert ist. Die Auswerteeinheit 70 weist hierfür eine Steuerungseinheit 80 auf, die zum einen Informationen von den Sensoren 60 empfängt und zum anderen es erlaubt auf diese zurückzuwirken.

Die Sensorauswerteeinheit 70 weist ferner eine Kommunikationseinheit 90 auf, die es der Sensorauswerteeinheit 70 erlaubt eine Datenkommunikation durchzuführen. Die Kommunikationseinheit 90 ist hierfür entweder direkt oder über einen Bus 100 der Steuerungs- und Leistungselektronik 30 mit dem Kommunikationspfad 40 verbunden. Die Kommunikationseinheit 90 erlaubt es zum einen, dass die Sensorauswerteeinheit 70 von sich aus Kontakt mit dem externen Gerät 50 aufnimmt, beispielsweise zur routinemäßigen Übertragung gesammelter Daten oder aber auch zur Signalisierung eines.Alarms. Auf der anderen Seite kann das externe Gerät 50 über die Kommunikationseinheit 90 eine Datenkommunikation mit der Sensorauswerteeinheit 70 aufbauen und durchführen, beispielsweise insoweit dies für eine externe zentrale Steuerung erforderlich ist.

Bei Verwendung von Momentensensoren erlaubt die Erfindung so eine Rückführung von abtriebs- und/oder antriebsseitig gemessenen Momenten, beispielsweise als Störgrößen in einen Regelkreis. Hierdurch kann die Dynamik des Motors erhöht, Ausschwingzeiten verringert werden oder eine Regelung adaptiv erfolgen. Ferner lassen sich Sensorsignale als Steuergrößen verwenden, was zu einer Optimierung, Steuerung oder Diagnose eines Fertigungsprozesses führen kann. Schließlich erlaubt die erfindungsgemäße dezentrale Sensorik und Auswertung Informationen über den wirklichen Zustand der Maschine zu erhalten. Dies macht beispielsweise einen Teleservice "bis in die Maschine hin" möglich, erlaubt die Berechnung von Restlebensdauer, Black Box Betrachtungen (z.B. "Was geschah in den letzten 5 Minuten"), den Nachweis eines Maschinencrashs, Service on Demand, Ermittlung kundenspezifischer Lastprofile, die Zustandsanalyse von Prototypmaschinen, usw.

## Patentansprüche

1. Eine Antriebsregelung zur Steuerung und/oder Regelung eines mit einem elektrisch betriebenen Motors (10) verbundenen Getriebes (20) für Maschinen, aufweisend:
eine Sensorauswerteeinheit (70), die mit einer Leistungselektronik (30) an den Motor (10) und/oder an das Getriebe (20) anschliesst, wobei Motor (10) und Getriebe (20) eine Einheit bilden, wobei zumindest ein Sensor (60) mit der Sensorauswerteeinheit (70) in Verbindung steht, und die Sensorauswerteeinheit (70) eine Steuerungseinheit (80) aufweist, die es der Sensorauswerteeinheit (70) erlaubt unmittelbar auf das Getriebe (20) einzuwirken und/oder dieses zu steuern, wobei der oder die Sensoren (60) zumindest einen Kippmomentsensor und/oder Leckagesensor und/oder Schwingungssensoren und/oder Ölstandssensoren aufweist.

2. Die Antriebsregelung die nach Anspruch 1 aufweisend:
einen oder mehrere Sensoren (60) zur Erfassung betriebsspezifischer Parameter des Getriebes (20), und eine dezentrale Sensorauswerteeinheit (70), mit der der oder jeder Sensor (60) verbunden ist, zur eigenständigen Auswertung von Informationen, die von dem Sensor oder den Sensoren geliefert werden, wobei die dezentrale Sensorauswerteeinheit (70) direkt mit Motor (10) und/oder Getriebe (20) eine Einheit bildet und eine eigenständige Regelung von Motor (10) und/oder Getriebe (20) auf bestimmte Signale des zumindest einen Sensors (60) ermöglicht, wobei der oder die Sensoren (60) zumindest einen Kippmomentsensor und/oder Leckagesensor und/oder Drehmomentsensor, Temperatursensor und/oder Drehzahlsensoren, Schwingungssensoren und/oder Ölstandssensoren aufweist.

3. Die Antriebsregelung nach Anspruch 1 oder 2, worin sich der Sensor oder die Sensoren (60) und/oder die dezentrale Sensorauswerteeinheit (70) räumlich an dem Motor (10) oder dem Getriebe (20) oder zumindest in engerer räumlicher Nähe hierzu befinden/befindet.

4. Die Antriebsregelung nach wenigstens einem der Ansprüche 1 bis 3, worin die Sensorauswerteeinheit (70) zusammen mit dem Sensor oder den Sensoren (60) eine dezentrale intelligente Informationssammlungs- und Auswerteeinheit darstellt.

5. Die Antriebsregelung nach einem der Ansprüche 1 bis 4, worin die Sensorauswerteeinheit (70) eine Kommunikationseinheit (90) aufweist, die es der Sensorauswerteeinheit (70) erlaubt eine Datenkommunikation mit einem externen Gerät (50) durchzuführen.

6. Die Antriebsregelung nach einem der Ansprüche 1 bis 5, worin die Sensorauswerteeinheit (70) eine Kommunikationseinheit (90) aufweist, die es einem externen Gerät (50) erlaubt eine Datenkommunikation mit der Sensorauswerteeinheit (70) durchzuführen.

7. Die Antriebsregelung nach Anspruch 6, worin die Kommunikationseinheit (90) es der Sensorauswerteeinheit (70) ferner erlaubt eine Datenkommunikation mit dem externen Gerät (50) durchzuführen.

## Claims

1. Drive control for open- and/or closed-loop control of a transmission (20) for machines that is connected to an electrically operated motor (10), comprising:
a sensor evaluation unit (70), which is connected by power electronics (30) to the motor (10) and/or to the transmission (20), wherein motor (10) and transmission (20) form a unit, wherein at least one sensor (60) is connected to the sensor evaluation unit (70), and the sensor evaluation unit (70) comprises an open-loop control unit (80) that allows the sensor evaluation unit (70) to act directly upon and/or control the transmission (20), wherein the sensor or sensors (60) comprise at least one tipping torque sensor and/or leakage sensor and/or vibration sensors and/or oil level sensors.

2. Drive control according to claim 1 comprising:
one or more sensors (60) for detecting operation-specific parameters of the transmission (20), and a decentralized sensor evaluation unit (70), to which the sensor (60) or each sensor (60) is connected, for the independent evaluation of data supplied by the sensor or sensors, wherein the decentralized sensor evaluation unit (70) directly forms a unit with motor (10) and/or transmission (20) and allows independent closed-loop control of motor (10) and/or transmission (20) in response to specific signals of the at least one sensor (60), wherein the sensor or sensors (60) comprise at least one tipping torque sensor and/or leakage sensor and/or torque sensor, temperature sensor and/or rotational speed sensors, vibration sensors and/or oil level sensors.

3. Drive control according to claim 1 or 2, wherein the sensor or sensors (60) and/or the decentralized sensor evaluation unit (70) is/are situated spatially adjacent to the motor (10) or the transmission (20) or at least in closer spatial proximity thereto.

4. Drive control according to at least one of claims 1 to 3, wherein the sensor evaluation unit (70) together with the sensor or sensors (60) represents a decentralized intelligent data collection and evaluation unit.

5. Drive control according to one of claims 1 to 4, wherein the sensor evaluation unit (70) comprises a communication unit (90), which allows the sensor evaluation unit (70) to carry out data communication with an external device (50).

6. Drive control according to one of claims 1 to 5, wherein the sensor evaluation unit (70) comprises a communication unit (90), which allows an external device (50) to carry out data communication with the sensor evaluation unit (70).

7. Drive control according to claim 6, wherein the communication unit (90) further allows the sensor evaluation unit (70) to carry out data communication with the external device (50).

## Revendications

1. Régulation d'entraînement destinée à commander et/ou à réguler un engrenage (20) pour machines, relié à un moteur à actionnement électrique (10), présentant :
une unité d'évaluation de capteur (70) qui se raccorde avec une électronique de puissance (30) au moteur (10) et/ou à l'engrenage (20), le moteur (10) et l'engrenage (20) formant une unité, l'au moins un capteur (60) communiquant avec l'unité d'évaluation de capteur (70), et l'unité d'évaluation de capteur (70) présentant une unité de commande (80) qui permet que l'unité d'évaluation de capteur (70) agisse directement sur l'engrenage (20) et/ou de commander ce dernier, le capteur ou les capteurs (60) présentant au moins un capteur de couple de basculement et/ou un capteur de fuite et/ou des capteurs d'oscillation et/ou des capteurs de niveau d'huile.

2. Régulation d'entraînement selon la revendication 1, présentant :
un ou plusieurs capteurs (60) destiné à capter des paramètres spécifiques au fonctionnement de l'engrenage (30), et une unité d'évaluation de capteur décentralisée (70) à laquelle est relié le ou chaque capteur (60), destinée à évaluer les informations qui sont fournies par le ou les capteurs, l'unité d'évaluation de capteur décentralisée (70) formant directement une unité avec le moteur (10) et/ou l'engrenage (20) et permettant une régulation autonome du moteur (10) et/ou à l'engrenage (30) sur des signaux déterminés de l'au moins un capteur (60), le capteur ou les capteurs (60) présentant au moins un capteur de couple de basculement et/ou un capteur de fuite et/ou un capteur de couple, un capteur de température et/ou des capteurs de nombre de tours, des capteurs d'oscillation et/ou des capteurs de niveau d'huile.

3. Régulation d'entraînement selon la revendication 1 ou 2, dans laquelle le capteur ou les capteurs (60) et/ou l'unité d'évaluation de capteur décentralisée (70) se trouvent spatialement sur le moteur (10) ou l'engrenage (20) ou au moins à proximité spatiale étroite de ce dernier.

4. Régulation d'entraînement selon au moins l'une des revendications 1 à 3, dans laquelle l'unité d'évaluation de capteur (70) représente, ensemble avec le capteur ou les capteurs (60), une unité de collection et d'évaluation d'informations intelligente décentralisée.

5. Régulation d'entraînement selon l'une des revendications 1 à 4, dans laquelle l'unité d'évaluation de capteur (70) présente une unité de communication (90) qui permet que l'unité d'évaluation de capteur (70) effectue une communication de données avec un appareil externe (50).

6. Régulation d'entraînement selon l'une des revendications 1 à 5, dans laquelle l'unité d'évaluation de capteur (70) présente une unité de communication (90) qui permet que l'appareil externe (50) permet une communication de données avec l'unité d'évaluation de capteur (70).

7. Régulation d'entraînement selon la revendication 6, dans laquelle l'unité de communication (90) permet, par ailleurs, que l'unité d'évaluation de capteur (70) effectue une communication de données avec l'appareil externe (50).
